# EUROPEAN PATENT APPLICATION

(11) **EP 3 121 587 A1**
(43) Date of publication of application: **25.01.2017**
(21) Application number: 14721426.6
(22) Date of filing: 21.03.2014
(51) Int. Cl.: G01N 21/55, B01L 3/00

(54) **DEVICE AND METHOD FOR DETECTING BIOMARKERS**

(71) Applicant: Universidad De Cantabria, 39005 Santander (ES); Servicio Cántabro de Salud, 39011 Santander - Cantabria (ES); Fundación Instituto de Investigación Marqués de Valdecilla (IDIVAL), 39011 Santander (ES); Fundacion Tekniker, 20600 Eibar (Guipuzkoa) (ES); Cellbiocan S.L., 39011 Santander (ES)
(72) Inventor: MORENO GRACIA, Fernando, E-39005 Santander (ES); GONZÁLEZ FERNÁNDEZ, Francisco, E-39005 Santander (ES); BARREDA GÓMEZ, Ángela Inmaculada, E-39005 Santander (ES); DÍEZ AHEDO, Ruth, E-20600 Eibar (Guipuzkoa) (ES); OTADUY DEL PASO, Deitze, E-20600 Eibar (Guipuzkoa) (ES); MERINO ÁLVAREZ, Santos, E-20600 Eibar (Guipuzkoa) (ES); FERNÁNDEZ LUNA, José Luis, E-39011 Santander (ES); TALAMILLO CANCELO, Ana, E-39011 Santander (ES)
(74) Representative: Balder IP Law, S.L.
(86) International application number: PCT/ES2014/070215
(87) International publication number: WO 2015/140362

(57) **Abstract**

A biosensor for detecting the concentration or quantity of at least one biomarker present in a sample of a fluid. It comprises: a chip (410, 510) comprising: a substrate (411, 518) whereon a layer of metal has been deposited with at least one nanostructure (414, 514) designed to produce LSPR when it is subjected to an optical radiation of a certain spectral range; and a resonant cavity delimited by two surfaces that act as a mirror, where one of the two surfaces is the layer of metal with nanostructure (414, 514). The layer of metal with at least one nanostructure (414, 514) is biofunctionalized with at least one biomolecule, which recognizes said at least one biomarker. On exposing the chip (410, 510) to optical radiation when the sample is in contact with the chip, it measures the concentration or quantity of said biomarker present in the sample, by comparison of the spectral response of the light at the exit of the chip (410, 510) with a previously determined spectral pattern. The spectral response responds to the combined effect of LSPR in the plasmon nanostructure (414, 514) and of the resonant cavity resonance.

## Description

### TECHNICAL FIELD

The present invention belongs to the field of biomarker detection and, in particular, the detection of biomarkers in patients diagnosed with cancer, based on localized surface plasmon resonance (LSPR).

### BACKGROUND OF THE INVENTION

The development of metastasis is the main cause of morbidity and mortality in cancer patients. Therefore, the development of methods that allow a monitoring of the evolution of the disease and monitoring the response to treatments has great clinical value, since it may orientate the oncologist to take decisions that improve the course of the tumoral disease. The identification of biomarkers such as circulating tumour cells (CTCs) and micro-RNAs (also called hereinafter miRs) in peripheral blood allows, using minimally invasive techniques, said parameters to be assessed.

CTCs are epithelial cells found in the peripheral blood of cancer patients. The dissemination of CTCs through the bloodstream from the primary tumour gives rise to the development of metastasis, this being the main cause of mortality in cancer. One of the main problems in detecting CTCs is that they are found in very small quantities in the blood: note that in 1 ml of blood there are in the order of 1 to 10 CTCs, 10⁷ leukocytes and 10⁹ erythrocytes. The size of the CTCs varies between 10-20 µm. The detection methods of CTCs used to date are mainly based on their morphological aspects or physical properties (size, density, load), the detection of nucleic acids, and the use of immunoseparation techniques. However, both the detection of nucleic acids and the separation exclusively due to physical or morphological properties from blood samples have sensitivity and/or specificity problems.

At present, the only method that exists in the market, approved by the US governmental agency for the control of food and drugs (FDA), is CELLSEARCH^{®} (*CellSearchCirculating Tumour CellSystem*), marketed by Veridex. CELLSEARCH^{®} is based on immunoseparation techniques, which increases specificity using antibodies which recognize tumour cell proteins. This system is complex, requires specialized personnel, and has a high price on the market.

There is a second commercial product - CellCollector™ from GILUPI- to detect rare cells, such as CTCs, in vivo. It is an invasive technique applied in the hospital while the patient receives their therapy and after it.

Swee J.T. et al., in Versatile label free biochip for the detection of circulating tumour cells from peripheral blood in cancer patients (Biosensors and Bioelectronics 26 (2010) 1701-1705), discloses the separation of CTCs using a microfluidic device, based on the differences of size and deformation capacity among cancer cells and blood cells.

In turn, miRs are non-coding RNA of 15-25 nucleotides in length which regulate gene expression and which are involved in a multitude of biological processes such as cell proliferation and differentiation, apoptosis and development. The altered expression of miRs has been associated with cancer and other pathologies such as diabetes, obesity, neurological, cardiovascular or autoimmune diseases. To date, more than 1500 miRs have been described in humans, and they can act as oncogenes (for example, miR-10b, -155, -21, miR-17-92) or as tumour suppressors (for example, miR-15, -16, -26a, -126, -335 and members of the *let-7* and miR-34 families). The analysis of the expression patterns of miRs in different tumours has made it possible to characterize the "miR print" for various types of cancer, with such specificity that it may even identify the primary tumour that causes the metastasis. Furthermore, due to their great stability, during recent years miRs have been identified in circulating cells of bodily fluids such as blood, seminal plasma, serum, saliva and urine, which allows their quantification, i.e. expression levels, in a non-invasive manner, as described by Chen et al. (2008) and Di Cam and Croce, (2013). The miR expression levels are also correlated with the stage of the tumour, and therefore it may be used to study progression of the tumour, the prognosis and response to treatment.

Furthermore, plasmonics is a relatively modern science based on basic principles of the optics and physics of materials, normally in the visible-near infrared range (0.4-2µm). Its object of study are plasmons or plasmon resonances: collective excitations of the quasi-free electrons present in the metals formed of a nanometric size, which in resonance constitute localized surface plasmon (LSPR). For applications which require reduced size assemblies, it is advisable to make use of the high electromagnetic fields which are generated in the LSPR configuration on illuminating nanometric structures. The case of periodic structures (of period less than the excitation wavelength) with nanoholes (usually circular and with diameter less than the excitation wavelength) constitutes a case of special interest, since their easy manufacturing and high sensitivity to changes in the optical properties of the surrounding medium has been demonstrated.

International patent application WO-2011/106057-A2 discloses a biosensor based on a plasmon nanostructure whereon an optical radiation (0.4-0.8µm) strikes. The sensor is formed by a substrate and a metal film deposited on the substrate. The metal film incorporates an array of nanostructures the dimensions of which are less than the wavelength of the incident light beam.

Sipova, H. et al., in Surface plasmon resonance biosensor for rapid label-free detection of microRNA at subfemtomol level (Anal Chem. 2010 December 15; 82(24): 10110-10115) disclose a method to detect miRs based on surface plasmon resonance (SPR) by a diffraction network called surface plasmon resonance coupler and disperser (SPRCD).

Frolov, L., et al. In Detection of Micro-RNA using LSPR Spectroscopy for Diagnostic Applications (77th Meeting of the Israel Chemical Society, 7-8 February 2012) discloses an LSPR-based biosensor platform for miR detection. miR identification involves immobilization of a DNA sequence bound to a thiol group and complementary to the miR sequence one wants to detect.

Escobedo C. et al., in On-chip nanohole array based sensing: a review (Lab Chip, 2013, 13, 2445-2463), discloses plasmon sensors based on nanohole arrays. Also Escobedo, in US patent application US-2012/0292496-A1, discloses an apparatus to detect biological samples using a nanohole array and plasmon excitation. In particular, the sensing technique used is based on nanohole arrays with flow-through. This technique involves the passage of the sample carrier fluid through the nanohole array. Since the samples must flow through said array, this technique is invalid for detecting cells of size larger than the diameter of the nanoholes. In other words, the technique is invalid for detecting CTCs. Furthermore, it requires the application of external electric fields and high pressures, which hinders the possibility of using disposable, easy-to-handle chips, by a non-specialized hospital operator.

US patent application US-2012129192-A discloses a CTC detector based on a microfluidic system and an array of functionalized nanostructures with antibodies. Said nanostructures are highly flexible *nanoneedles.* CTC detection is based on the fact that they are trapped by the nanoneedles. However, this system may not be specific. The nanoneedles are designed so that the cells of a certain size are trapped between them. However, there is the risk that other cells different to CTCs, but of similar size (e.g. monocytes in blood), are also trapped, or that the CTCs, due to their plasticity, are not trapped, distorting the final result.

### DESCRIPTION OF THE INVENTION

The present invention tries to resolve the drawbacks mentioned above using a system for the detection of biomarkers, such as CTCs or miRs, which is simple and of great specificity. Simple is understood to mean that the system is easy to handle, of reduced size, which does not require specialized personnel and that can be used in the chain of hospital clinical analysis. Great specificity is understood to mean that which is selective in the identification of the biomarker in question.

The invention is based on the changes produced in a nanostructured surface when the light passes through it due to the change in refraction index of the medium in contact with said surface. In other words, when the light passes through a nanostructured surface, changes occur (mainly displacements) in the plasmon resonance frequency in accordance with the refraction index of the medium. Therefore, it serves to sense any change in the medium, whether, aqueous, organic or of any other origin. The changes in the refraction index may be due to the presence of a biomarker, CTC or miR type, with the invention not being limited to this type of biomarker. To improve the sensitivity in the change in the medium it is possible to activate (biofunctionalize) the surface with any ad-hoc biomolecule for the biomarker in question which is being monitored at any given time.

In a first aspect of the invention, a biosensor is provided for detecting the concentration or quantity of at least one biomarker present in a sample of a fluid. The biosensor comprises: a chip comprising: a substrate whereon a layer of metal has been deposited whereon at least one nanostructure is implemented designed to produce localized surface plasmon resonance (LSPR) when it is subjected to an optical radiation of a certain spectral range; and a resonant cavity delimited by two surfaces that act as a mirror in that certain spectral range. One of the two surfaces that delimit the resonant cavity is the layer of metal with at least one nanostructure. This layer of metal with at least one nanostructure is biofunctionalized with at least one biomolecule which recognizes said biomarker, The biosensor is configured to, on exposing the chip to an optical radiation in that spectral range when the sample is in contact with the chip, measure the concentration or quantity of the biomarker present in the sample, by comparison of the spectral response of the light at the exit of the chip with a previously determined spectral pattern. This spectral response responds to the combined effect of the localized surface plasmon resonance (LSPR) in the at least one plasmon nanostructure and of the resonant cavity resonance.

In a possible embodiment, the chip comprises a second substrate whereon a layer of metal has been deposited which constitutes the second surface which delimits the resonant cavity, the biosensor being configured so that, in use, the flow of the sample passes through the resonant cavity.

In a more particular embodiment, at least one nanostructure has been implemented on that layer of metal deposited on the second substrate designed to produce localized surface plasmon resonance (LSPR) when it is subjected to an optical radiation of a certain spectral range.

In another possible embodiment, the chip comprises, on the other surface of the substrate, a second layer of metal which constitutes the second surface which delimits the resonant cavity, the biosensor being configured so that, in use, the flow of the sample passes over the layer of metal whereon at least one nanostructure has been implemented and which acts as first surface which delimits the resonant cavity.

In another possible embodiment, the chip comprises a second substrate whereon a layer of metal has been deposited which constitutes the second surface which delimits the resonant cavity, the biosensor being configured so that, in use, the flow of the sample passes over the layer of metal whereon at least one nanostructure has been implemented and which acts as first surface which delimits the resonant cavity.

In a more particular embodiment, at least one nanostructure has been implemented on that layer of metal deposited on the second substrate designed to produce localized surface plasmon resonance (LSPR) when it is subjected to an optical radiation of a certain spectral range.

Preferably, the biosensor comprises, on the substrate, a layer of metal to facilitate adhesion of the layer of metal which delimits the resonant cavity.

Preferably, the at least one nanostructure is a nanohole.

In a possible embodiment, the chip comprises a plurality of arrays of different nanostructures, with the biosensor being configured to measure the concentration or quantity of different biomarkers simultaneously.

Preferably, a dimension of the at least one nanostructure is less than the wavelength of the light whereto the chip is exposed. In the case that the at least one nanostructure is a nanohole, this dimension is the diameter of the nanohole.

Preferably, the biosensor further comprises a microfluidic cell to immobilize the biomarkers on the surface of the chip.

In a possible embodiment, the biosensor further comprises: a light source to provide an optical radiation of a certain spectral range to the chip; means to make the fluid sample reach the chip; optical means to adapt the light from the light source to the illumination of the chip; optical means to capture an optical signal with information on the sample from the chip; and means to view and analyse the optical signal from the chip.

In a preferred embodiment, the at least one biomarker is circulating tumour cells (CTCs).

In a second aspect of the invention, a diagnostic kit is provided to analyse a sample of a fluid to determine the concentration and/or quantity of at least one biomarker of a disease, comprising a biosensor such as that previously described.

In a third aspect of the invention, a use of the biosensor described above is provided, to diagnose the presence and/or evolution of metastasis.

In a fourth aspect of the invention, a method is provided to detect the quantity and/or concentration of at least one biomarker present in a sample of a fluid, where that quantity and/or concentration of at least one biomarker is indicative of the presence or absence of a disease or of the evolution of a disease. The method comprises the stages of: making a sample of a fluid flow through a chip comprising at least one substrate whereon a layer of metal has been deposited whereon at least one nanostructure has been implemented, and a resonant cavity delimited by two surfaces that act as a mirror in a certain spectral range, where one of the two surfaces that delimit the resonant cavity is the layer of metal with at least one nanostructure;
subjecting the chip to an optical radiation in that certain spectral range, where that optical radiation produces localized surface plasmon resonance (LSPR) in the at least one nanostructure and resonance in the resonant cavity;
determining the concentration of the at least one biomarker present in the sample, by comparison of the spectral response of the light at the exit of the chip with a previously determined spectral pattern, where that spectral response responds to the combined effect of the localized surface plasmon resonance in the at least one plasmon nanostructure and of the resonant cavity resonance.

In a possible embodiment, the stage of making a sample of a fluid flow through a chip comprises making the flow of the sample pass through the resonant cavity.

In another possible embodiment, the stage of making a sample of a fluid flow through a chip comprises making the flow of the sample pass over the layer of metal whereon at least one nanostructure has been implemented and which acts as first surface which delimits the resonant cavity.

In a fifth aspect of the invention, a method is provided to diagnose the presence and/or evolution of metastasis comprising applying the method to detect the quantity and/or concentration of at least one biomarker present in a sample of a fluid described above.

The advantages of the invention will be apparent in light of the description presented below.

### BRIEF DESCRIPTION OF THE DRAWINGS

To complement the description being made and in order to aid towards a better understanding of the characteristics of the invention, in accordance with a preferred example of embodiment thereof, a set of drawings is attached as an integral part of said description wherein, with illustrative and non-limiting character, the following has been represented:
Figure 1A shows a diagram of a cancer biomarker detection system, in accordance with an embodiment of the invention. Figure 1B shows the incidence and transmittance of the light on the multiplexed chip of the invention in accordance with figure 1A. Figure 1C describes the optical assembly in accordance with a possible implementation of the system of the invention, from the illumination until the collection and processing of the signal. Figures 1D and 1E show an example of a microfluidic cell used in the invention.
Figure 2 illustrates a diagram of a basic configuration of the chip of the invention.
Figure 3A shows a diagram of the design of a nanostructure, in this case nanoholes implemented on a chip. Figure 3B shows a view of a possible nanostructure of the chip. Figure 3C represents a possible multiplexed configuration, i.e. with sensor capacity, in the same chip of the invention.
Figures 4A, 4B, 5A, 5B and 5C show various designs of the chip, in this case with Fabry-Perot-type resonant cavity, in accordance with possible embodiments of the invention.
Figures 6A and 6B show a configuration wherein the fluid flows through the Fabry-Perot cavity created in accordance with figures 4A and 4B respectively.
Figures 7A, 7B and 7C show an alternative configuration, wherein the fluid flows using a microfluidic cell on the surface of the nanostructured chip in accordance with figures 5A, 5B and 5C respectively.
Figure 8 shows a diagram of the illumination used in the numerical simulations.
Figure 9 shows the transmission spectrum obtained in the simulation of the basic geometry of configuration (example 1) from the illumination of figure 8.
Figure 10 shows an example of the near field for the resonance of 760nm in figure 9 (example 1).
Figure 11 shows the sensitivity obtained (390.71nm/R.I.U.) of the chip of the invention for the simulated geometry in accordance with a basic configuration (example 1).
Figure 12 shows the reflection spectrum obtained in the simulation of the chip of the invention with geometry or configuration with Fabry-Perot-type resonant cavity (figure 5A with the flow on the surface of the chip as shown in figure 7A) (example 2).
Figure 13 shows the variation of the reflection spectrum with the change in the refraction index of the sample in the previous configuration (example 2).
Figure 14 shows the sensitivity obtained (198.57nm/R.I.U.) for the geometry with resonant cavity (example 2). Although a decrease in sensitivity is observed, a narrowing of the resonance peaks are also observed, which leads to an increase in the quality factor of the detection system.
Figure 15 shows the transmission spectrum obtained for the case of the geometry with Fabry-Perot-type resonant cavity (figure 4A with the sample in the interior of the cavity, as shown in figure 6A) (example 3).
Figure 16 shows, in the transmission spectrum, the region of the resonance which provides highest transmission values (example 3).
Figure 17 shows the sensitivity obtained (489.72nm/R.I.U.) for the geometry with resonant cavity and the sample in the interior of the cavity (example 3). A substantial improvement is observed as regards the basic chip configuration.
Figure 18 shows a diagram of the model used in a simulation wherein the physical presence or one or more CTCs has been modelled.
Figure 19 shows the sensitivity obtained of the chip of the invention for the simulated geometry in accordance with a basic configuration and the model of figure 18. It has been verified that the presence of two or more cells produces displacements, which follow behaviour linear with the number of cells.

### DESCRIPTION OF AN EMBODIMENT OF THE INVENTION

The system or sensor to detect biomarkers, preferably of cancer, such as CTCs and miRs, in a fluid, such as, for example, blood, is based on localized surface plasmon resonance (LSPR). The fluid is preferably a fluid of patients with colon, breast, lung, prostate cancer or other tumours. The sensor system based on plasmon nanostructures described below makes use of the formidable effects (fundamentally of modification of the spectral properties and the amplitude of the incident light) of the transmission/reflection of light on nanostructures (preferably, but not limitatively, nanoholes) combined with the effects of resonant cavity. The system, preferably coupled to a microfluidic device wherethrough the fluid circulates, allows the detection of tumour biomarkers with great sensitivity, and therefore, the monitoring of the disease and monitoring of the response to the treatment.

The biosensor system of the invention detects the concentration (or number, in the case that individual "elements" are detected) of a biomarker present in a sample of a fluid. The system traps the one or more biomarkers of interest and then detects the change in the signal (mainly displacement of the incident light spectrum) that these biomarkers produce. Finally, this change in optical signal correlates with the presence of biomarkers (for example, in the case of CTCs number of cells and in the case of miRs concentration in the sample) detected.

Non-limiting examples of biomarkers that the biosensor of the invention is capable of trapping to later determine their concentration (whether counting individual elements, such as cells, or calculating the concentration of elements that it is not possible to individually count), are: cells and biomolecules (proteins, nucleic acids, such as miRs, mRNA and DNA, among others).

In a preferred embodiment, the biosensor is capable of detecting (trapping and quantifying) the presence of at least one biomarker: circulating tumour cells (CTCs) or a minimum concentration in the range of ng/ml of another type of biomarker, such as a biomolecule of type miR, mRNAs, DNA, or proteins.

In the context of this invention, fluid is understood to be any of the substances of the following non-exhaustive list: blood and urine. Both fluids, blood and urine may have undergone a pre-treatment or filtration to eliminate part of their components which may interfere negatively in the measurement. Other fluids that may carry biomarkers, for example, of cancer, are also considered fluids within the context of the invention.

"Nanostructure" is understood as a structure the dimensions whereof are in the range between 1 and 3000 nm. With respect to a substrate, the nanostructure may be situated on or integrated in the substrate. These nanostructures may have various forms, whether on the layer or layers of metal, such as columns, spheres, triangles or integrated in them, such as a hole, gap, or any other three-dimensional form. The nanostructures are disposed in the substrate forming an array of nanostructures.

In a preferred embodiment of this invention, the nanostructures have the form of nanoholes. In other embodiments, nanostructures other than nanoholes may be used.

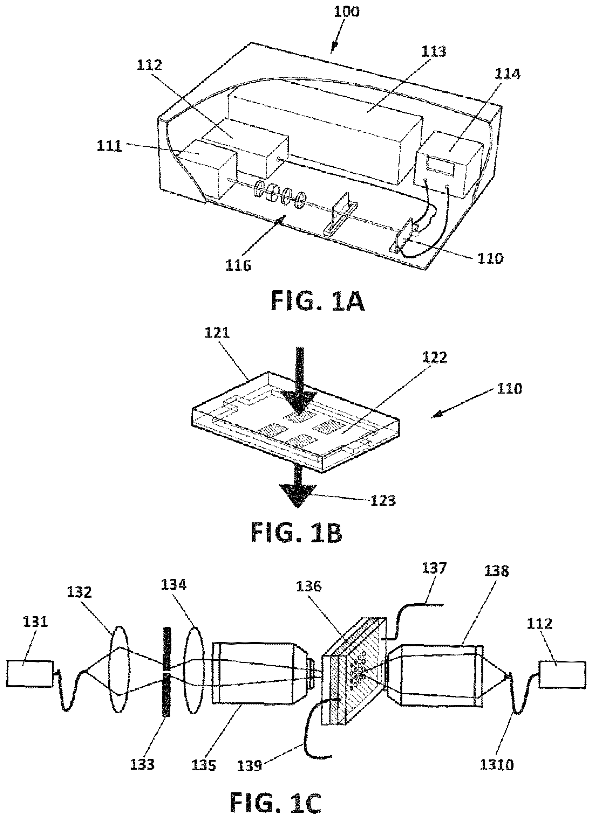

Figure 1A shows a diagram of a possible configuration of the biomarker detection system of the invention. The system 100 is a biosensor based on a chip with plasmon nanostructures (preferably nanoholes distributed periodically, and may or may not be symmetrical), comprising a stable light source 111 for the illumination of the chip (biosensor) 110; a meter or means for measuring 112 to view and analyse the optical signal produced (transmitted or reflected) by the biosensor with information on the sample and captured by a fibre; a power source and controller 113 of the complete device; a peripheral system 114 comprising a fluid pump for the pumping of the sample through a microfluidic cell and optical means 116 for adapting the light from the light source 111 to the illumination of the chip 110.

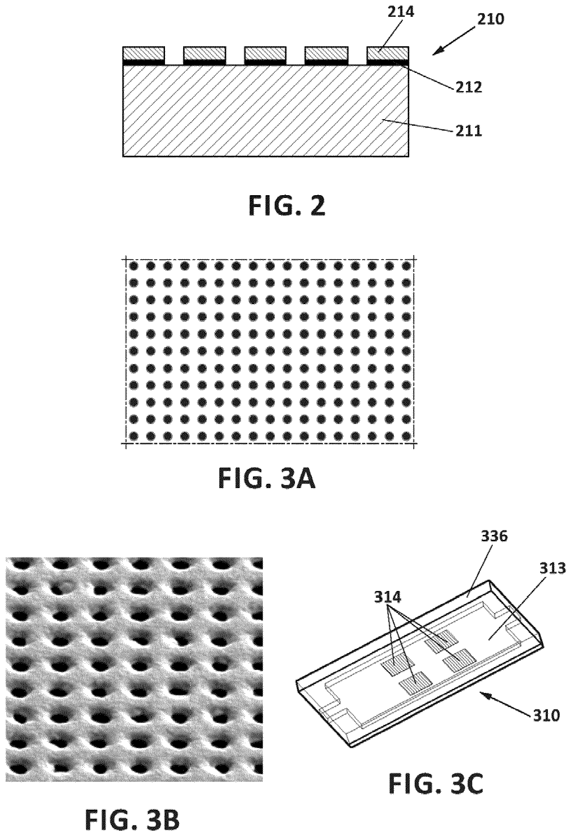

The chip 110, which is preferably disposable and low cost, is formed by a substrate (usually glass although other materials transparent to the incident light from the source 111 can also be used) whereon one or several metal layers have been deposited. The metal layer or layers comprise one or more surfaces which in turn comprise nanostructures disposed in accordance with a predetermined pattern. In a preferred embodiment, the predetermined pattern of nanostructures is a periodic pattern. The dimension of each nanostructure on the metal surface is less than the wavelength of the spectrum of an optical light source 111 which strikes it (metal surface 122), producing LSPR in the nanostructures, as schematized in figure 1B (reference 123 relates to the light transmitted with LSPR effect). When the pattern of nanostructures is periodic, the period (separation between nanostructures) may be greater or less than the wavelength of the incident light. The device proposed can work both by reflection and by transmission. In the first case the spectral properties of the reflected light shall be analysed and in the second those of the transmitted light. In general, it is possible to use any optical design that allows carrying the light from the light source to the sensor zone(s) of the chip. Figure 1B shows the incidence (upper arrow towards the chip) and transmittance (lower arrow that exits the chip) of the light on the chip, in this case multiplexed. The chip 110 is biofunctionalized with antibodies. By alternating different areas of nanostructures (arrays) on the metal of a same chip, it achieves a multiplexed system (represented in figure 1B by the squares on the chip surface). A multiplexed system allows the detection of several tumour biomarkers, biomolecules and/or more complex structures (such as CTCs), simultaneously. Figure 1B also schematizes the microfluidic cell 121. The details of the chip are explained below in more detail, in relation to figures 2 to 7B.

Means 112 to analyse and display the optical signal may be internal or external to the system 100. In a preferred embodiment, they are internal. Non-limiting examples of the means 112 that can be used as spectrometers, photospectrometers, CCD-type photodiode arrays (*charge-coupled devices*), CMOS (*Complementary Metal Oxide Semiconductor*) or such like, digital cameras, PMTs (*Photo Multiplier Tube*) and APDs (*Avalanche Photo Diode*). Preferably, a photospectrometer 112 is used. In a possible embodiment, the system comprises a CCD sensor, which makes it possible to obtain a spectrum for each channel (y-axis). The image provides the complete spectrometric information. This allows picking up the signal from the different sensor zones) simultaneously (multiplexed chips).

In general, it is possible to use any optical design that makes it possible to collect the light transmitted or reflected on the surface of the chip to the analysis and display system of the optical signal. An example of light collector is a microscope lens together with the optical fibre represented in figure 1C (138, 1310 respectively).

The system 100 comprises an optical system for the emission of the excitation light beam and reader of the biosensor response, represented in figure 1A in general terms by the elements 111, 112 and 116. In a possible implementation, the optical system functioning by transmission, schematized in figure 1C, is composed of a light source 131, an optical system of focussing the excitation light beam 132, a spatial filter diagram of the beam 133, an optical beam collimation system 134 and a microscope lens 135 which focuses said beam on a chip, preferably disposable, with a microfluidic cell (both schematized together and with reference of 136). The microfluidic serves so that the sample flows over the sensor zone(s) of the chip (nanostructures) previously biofunctionalized so that the sensor zone(s) capture the specific biomarker one wants to detect. This process is dynamic. Once this is performed and suitably cleaned, the actual detection process takes place (the biomarkers, for example CTCs, have been anchored to the chip. The sample to be monitored which has been pumped flows through the microfluidic cell and reaches the cell through an inlet tube 137 and is drained through an outlet tube 139. Although not represented in figure 1C, the tubes 137 139 are communicated with the peripheral system 114 of figure 1A (pumping of the sample). The light transmitted through the chip is collected by another microscope lens 138 coupled to an optical fibre 1310, which is in turn coupled to a spectrometer or spectrophotometer 112. The light source 131 may provide both non-polarized and partially polarized light. The light from the source 131 emits preferably in the UV and/or VIS and/or IR spectral range. In a possible embodiment, the light source 131 is a white light source with known spectrum. Interferential filters can be introduced to quantify the spectrum of the excitation light or polarized filters. As a person skilled in the art can understand, not all optical elements described in relation with figure 1C are vital nor is the configuration of figure 1C the only possibility. For example, it is desirable but not essential that the light reaches the chip focussed.

The chip 110 is preferably disposable and low cost. By being disposable it avoids the problem of cleaning it to reuse it after it has been contaminated by a previous sample. As a manufacturing technique it preferably uses NIL (*Nanoimprint Lithography*)*.* This technique makes the chip, and therefore the final device- cheap both in financial terms and manufacturing time. Furthermore, due to the device configuration (preferably horizontal optical alignment when it functions by light transmission, although in this case it could also be vertical or L-shaped by prisms), the change in the chip once used is very simple and the final assembly of the device (integration of all components and housing in the final casing) facilitates the change of the disposable chip, guaranteeing a correct positioning of the chip (better than in other more complex SPR-based devices, by reflection). This is all equally applicable to the case of the configuration working by reflection.

The microfluidic system or microfluidic cell 136 (figure 1C) allows immobilizing biomolecules on the metal surface of the chip (proteins, nucleic acids, among others) or cells automatically and without direct human intervention since said cell is fed by a peripheral system 114 (figure 1A). The cell may or may not have microfluidic channels integrated in a fed fluidic system. Examples of elements that form part of this peripheral system 114 are pumps and/or valves. The microfluidic cell is formed by a disposable polymer sheet and reusable components. The fluidic cell in itself is outside the scope of this invention. The fluidic or microfluidic cell 121 can also be observed in figure 1B, wherein the cell is represented as a transparent sheet 121 above the chip. Although not represented in figures 1B or 1C, the fluidic cell 121 136 may comprise an array of microchannels wherethrough the sample circulates. The fluid sample is made to circulate through the microfluidic cell (for example, blood), which may have been pretreated (filtered) or not, which contains the biomarker (for example, CTCs) which will interact with the ligand or biomolecule with which the chip has been functionalized. The fluidic cell may be implemented in several ways.

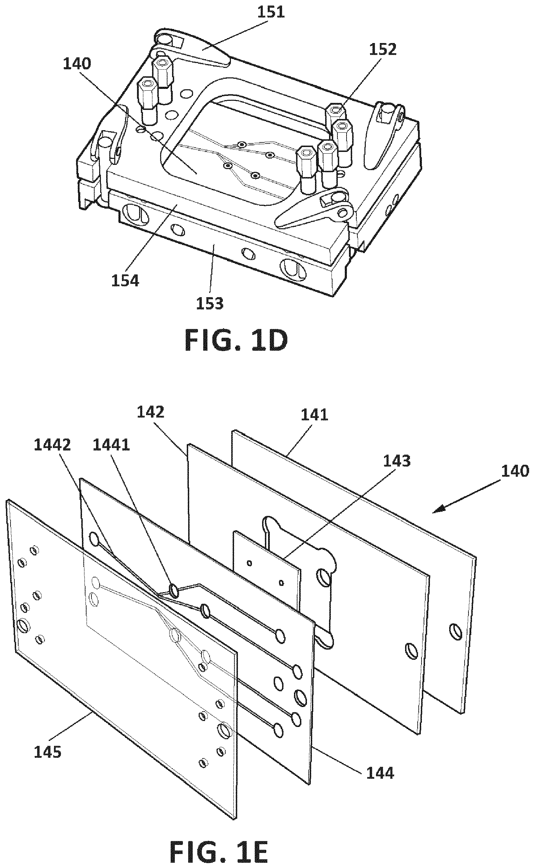

Figures 1D and 1E show an example of microfluidic cell 140 used in the present invention. This cell 140 is based on a flow system of the sample placed on the surface of the nanostructured chip. This microfluidic cell configuration is that used, for example, in the chips of figures 2, 3C, 5A and 5B. This possible implementation of microfluidic cell is not limitative, and any other cell or devices can be used that can carry the sample to the sensor areas of the chip. Figure 1D shows the outer part of the microfluidic cell 140 of the example, whilst figure 1E shows its interior elements.
In its outer part, the cell 140 is formed by a casing in turn formed by a base 153 and a cover 154. In this case, both are stainless steel. The casing also comprises microfluidic connectors 152 which connect the cell with the pumping system via micrometric tubes and cams 151 for the closing of the casing, guaranteeing the water-tightness of the cell. These cams permit different depths of the microchannels and housing wells of the sample.

In its internal part (figure 1E), the cell 140 comprises a sheet 142 of housing for the disposable chip, the thickness whereof is similar to that of the chip 143. In this example, the chip 143 has dimensions of 20x20mm. The chip contains sensor zones (the nanostructures). Since the chip has several sensor zones, it is a multiplexed system. The cell 140 also comprises a sheet 144, which in the example is polyethylene, the thickness whereof adapts to the sample which is going to be monitored. In this sheet 144 the wells are machines wherein the wells where the sample 1441 is housed and the microchannels 1442 which carry and collect the sample from the sensor zones (wells) are machined. Both sheets 142 144 form the interior of a "sandwich" the ends whereof are a sheet 141, which in this example is stainless steel and has a thickness of 1mm, and a cover 145 which makes the microfluidic system watertight and in this example is Pyrex.

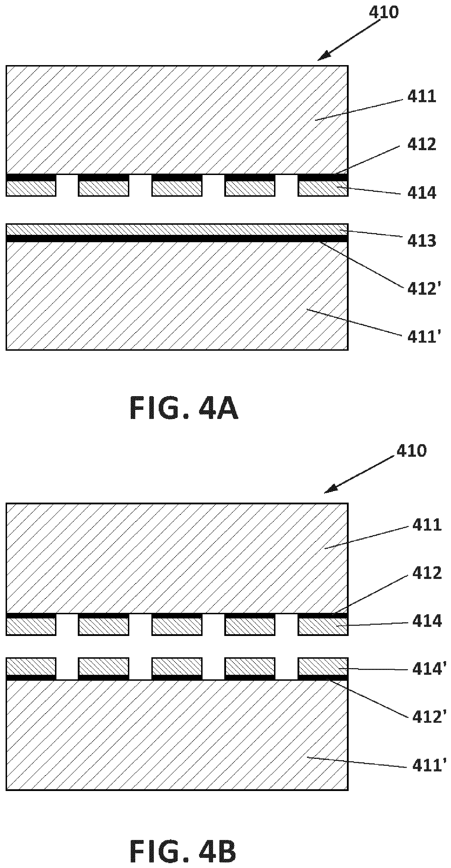

Alternatively, the cell can be based on a sample flow system which allows the passage thereof through a cavity formed by two "mirror" (metal) surfaces comprised in the chip. This configuration of microfluidic cell is that used, for example, in the chips of figures 4A and 4B. In this case (figures 4A and 4B), in a minimum implementation, the sample flow may directly circulate between the two thin layers of metal (413 and 414 in figure 4A and 414 and 414' in figure 4B). However, if this Fabry-Perot configuration uses a multiplexed chip, i.e. with several nanostructure arrays distributed in the chip, it is then necessary to add a microfluidic cell (with its channels), which carries the sample to each sensor area (areas with nanostructure). Any other type of system and microfluidic cell can be used alternatively, whenever they make it possible to carry the fluid sample to the sensor zones of the chip (nanostructure array).

The microfluidic cell confines the sample in the environment of the nanostructures (for example, nanoholes) made in metal (for example, gold). Specifically, the cell must confine the sample in a distance not greater than a certain threshold of the metal plane. In an example of implementation of a preferred embodiment, wherein the chip is designed to detect/count CTCs, that threshold has been defined at 100 µm of the metal plane, which is the example is gold.

The microfluidic cell may provide different functionalities. On the one hand, when the chip is not previously biofunctionalized, it has the function of activation of the surface and cleaning of the sample, and on the other hand, optimizing the reaction of recognition between antibodies and biomolecules. The reagents to activate the surface can be introduced through the cell, blocking the surface to avoid non-specific bonds, immobilizing the antibodies and washing the surface by introduction of the suitable cleaning buffer.

On the other hand, the same cell serves as a reaction chamber (biomolecule or ligand bond with biomarker), facilitating the introduction of the sample and controlling the reaction time to favour the recognition reaction with the antibodies in a suitable measurement buffer.

Other potential tasks of the microfluidic cell are to provide suitable biomarkers and activation reagents to functionalize the chip surface, controlling the passage of the sample through the reaction chamber, guaranteeing the suitable reaction times for the molecular recognition. The cell must automatically allow the passage of washing solutions as well as the introduction of new biomolecules (or in general, biomarkers) with amplifying effect or seeking greater specificity.

In order that the biosensor can determine the presence or absence of a certain pathology, for example, metastasis, the biosensor must detect the levels of one or several biomarkers. For example, if the biomarker present in the sample is CTCs, the presence or absence of metastasis is determined either by the specific number of CTCs present in the sample or the exceeding of a certain threshold of CTCs in the sample. In any of the cases, this is determined by correlating the spectral response obtained by the biosensor with a previously established pattern. In another example, if the biomarker present in the sample is miRs, mRNAs, DNAs or proteins, the presence or absence of pathology is determined by the concentration of the biomarker in the sample and, as in the previous case, it takes as a reference a previously established response pattern. In any of the cases, it is necessary that the fluid sample has a minimum volume (which may depend on the type of biomarker sought), i.e. it is necessary to take a representative sample. In the case, for example, of samples from cancer patients, when the biomarker which is going to be detected is CTCs, it is necessary that the volume of liquid which forms the sample is between 5 and 10 ml, since with a smaller volume it is difficult to detect circulating tumour cells in initial stages due to their low concentration.

Since the device uses as part of the chip metals nanostructured preferably with nanoholes, when the light hits them they may work by transmission, which is the preferred option. This considerably simplifies the optical assembly, since the lighting and the detection are aligned with a common axis, it thus being possible to perform an optical assembly in linear configuration (both horizontal and vertical). This provides great versatility to the device: smaller size (miniaturization of the device), less difficulty in alignment, greater robustness (portable system), etc., compared with the sensors which work due to reflection using Krestschman-type configurations or equivalent.

Figure 2 illustrates a diagram of a basic configuration of the chip 210. The chip 210 is formed by a substrate 211 made from a conventional dielectric material. The substrate 211 must be transparent to light, i.e. it does not alter the light which this passes through it. Preferably, a fine layer of a metal 212 is placed on this substrate, which contributes to adherence of the upper layer, which is a fine layer of another biocompatible material 214 (usually, but not limitatively, gold).

The substrate 211 is a dielectric material (whether organic or inorganic chemical compound (for example, glass or polymer respectively) which serves as support for the final layer of metal 212 and has a sufficient percentage of transparency to the spectral band of the excitation light source. In general, the substrate 211 may be a material the rigidity of which makes it possible to deposit a metal (for example, gold) and manufacture the nanostructures. Non-limiting examples of materials from which the substrate 211 may be manufactured are: silicon dioxide, silicon nitride, glass, quartz, magnesium fluoride (MgF₂), calcium fluoride (CaF₂), zinc selenide (ZnSe), germanium or others.

Examples of the final layer of metal 212 to improve adhesion of the metal on the substrate are titanium and chromium.

The layer of metal containing the nanostructures 214 is biocompatible and together with said nanostructures gives rise to the effects linked to generation of LSPR when the light strikes it. The nanostructures are manufactured using conventional nanomanufacturing techniques, such as FIB (*Focus Ion Beam*), EBL (*Electron Beam Lithography*), thermal NIL, UV-NIL (*Ultra Violet NIL*)*.* Preferably the thermal NIL technique, which is relatively cheap, is used to manufacture disposable chips. The manufacturing technique of the nanostructures is outside the scope of the invention.

Preferably, the metal layer whereon the nanostructures 214 are made is of a metal selected from the group formed by gold, rhodium, palladium, silver, osmium, iridium, platinum, titanium, aluminium or any mixtures thereof. In a preferred embodiment gold or silver, and more preferably, gold, is used.

The final layer of metal 212 to improve adhesion has a thickness between 1 and 20 nm and the layer of nanostructured metal 213 between 20 and 300 nm.

The dimensions of the nanostructures may have a diameter between 1 nm and 1000 nm. The period of the nanostructures, in the case of periodic structures, or distance between the elements, may be the same, greater or less than double the larger dimension of the nanostructures. Preferably, it is equal to or greater than double the larger dimension of the nanostructures. The form of the structures may be circular, triangular, rectangular, elliptical or, non-limitatively, any type of polygonal structures, including gaps, ellipsoids or anisotropic forms. The dimensions, form and other characteristics of the nanostructures, as well as the period, are optimized and manufactured from the specific necessities of each application, depending, among other factors, on the type of tumour cells one wants to count or, in general, on the type of biomarker object of detection.

The chip is cleaned to eliminate organic compounds and oxides and is later washed and the nanostructures are suitably biofunctionalized, to be able to detect and increase the specificity of the biomarkers one wants to detect. In other words, to enhance that the biomarker or biomarkers are immobilized or anchored in the sensor zone or sensor zones of the chip, these are biofunctionalized with specific biomolecules (also called ligands or activation reagents) which recognize the biomarker intended to be detected. Examples of these biomolecules are antibodies, proteins or DNA probes (which recognize the biomarker in question). For example, if the biomarker is CTCs, the chip is biofunctionalized with biomolecules (for example, antibodies) recognizing the specific CTCs of the tumour (anti-EpCAM, anti-cytokeratins, among others). In another example, wherein the biomarker is nucleic acids (miRs, mRNAs or DNAs), the chip is biofunctionalized with DNA probes complementary to the specific nucleic acid of the tumour under analysis. In the case of proteins, the biofunctionalization is performed with molecules capable of specifically interacting with them (antibodies, ligands, other proteins, aptamers).

Furthermore, in a particular embodiment, if it is not possible to distinguish or there was not sufficient sensitivity to detect the cell type that has to adhere to the sensor, it would require a second marker (biofunctionalized nanoparticles) to distinguish them.

The chip may be biofunctionalized (i.e. activated) both inside and outside of the device. It is biofunctionalized inside using the microfluidic cell. Alternatively, it may be biofunctionalized outside the device and the already biofunctionalized chips acquired or marketed for the detection of a specific disease. In this last form, the end user only has to place the already biofunctionalized chip in the device and pass the sample over it.

The chips with nanostructured metal surface are preferably manufactured using the NIL technique. This is a high-precision method for the manufacturing of micro and nanostructures with high resolution, over large areas (cm), at a low cost, compared with other technologies, and with a high production yield (transferable to industry). The manufacturing capacity of nanostructures over large areas allows having an area sensitive to the sample to be monitored, as well as several sensitive areas (several nanostructures), in a same chip. This latter combined with a microfluidic cell tailor-made for the chip, gives the biosensor the multiplexing capacity which involves that more than one biomarker can be simultaneously detected per chip.

Figure 3A shows a diagram of the nanostructured area of a chip in accordance with the invention and figure 3B shows a SEM (*Scanning Electronic Microscopy*) image of the nanoholes of figure 3A. The exemplified chip is formed by a thin layer of gold with circular openings of square symmetry nanomanufactured in metal. The chip of the example has a surface of 20x20 mm and is nanostructured with an array of nanoholes of 150x150 µm, of period 350 nm and diameter 150 nm. These values may be modified if it is necessary to optimize the chip design.

Figure 3C represents a chip 310 with multiplexing capacity, comprising several nanostructures 314 on the same metal sheet (in this case, gold) 313, bound to the microfluidic cell 336. With this chip design each nanostructure may be biofunctionalized with different biomolecules (antibodies, or DNA probes, etc.) giving the system multiplexing capacity.

The measurement principle is based on the change undergone by the spectrum/transmission reflection (reflected/(transmitted intensity in accordance with incident wavelength) of the metal surface nanostructured with nanoholes, when the optical properties of the medium in contact with said surface change. Usually, said spectrum/transmission reflection has maximums or minimums (depending on the configuration) that are clearly defined for certain resonant wavelengths. The resonance conditions for metal surfaces with periodically distributed nanoholes, is well known. The metal character of the surface, the consequent generation of surface waves in the vicinity of each nanohole and the cooperative effect of all of them due to their periodicity, makes the changes of the optical properties of the medium in contact (usually that of its refraction index, n), produce notable spectral displacements, Δλ, of the aforementioned resonances and modifications in the intensity of its transmission spectrum, ΔI, from which those changes may be inferred. The spectral displacements (in nm) and/or modifications in the transmitted intensity (in W) due to changes in the refraction index, Δn, of the surrounding medium are usually respectively quantified by two sensitivity parameters, Δλ/Δn and ΔI/Δn, measured in nm/RIU and W/RIU respectively, where RIU are the initials for Refractive Index Units. In this case, the changes in the refraction index are given by the presence or absence of biomarkers in a dissolution pattern.

In short, if, for example, the transmitted light is analysed (maximum intensity and spectral position) through one of the functionalized chips 210 310 wherethrough the test sample passes (usually blood) through a microfluidic cell 336, it is possible to obtain a correlation between the modification of the spectral parameters mentioned of the transmitted light (with respect to that of the incident light) and the modifications of the optical constants of the test sample (its refraction index) by the potential presence of biomarkers (for example, CTCs). This makes the system act as a highly sensitive and specific biosensor. In other words, the system is capable of detecting the concentration or levels of biomarker or biomarkers present in a sample, for example, from a cancer patient. In the specific case that the biomarker is CTCs, the system is capable of detecting and identifying the number of CTCs or the minimum quantity of CTCs considered of interest (pass/no-pass type threshold) present in the sample (fluid). In other cases, such as, for example, if the biomarker is miRs, the system is capable of detecting the miR concentration. In other words, the system compares the spectral response of the system with a test sample (cells or biomolecules to be detected in a liquid buffer) on the chip with nanostructures and biofunctionalized and exposed to an optical radiation, with a reference (only liquid buffer) on the chip in the same optical conditions (previously determined pattern).

The spectral response of reference is experimentally obtained for each case with a sample of the liquid buffer containing the cells or the biomolecules to be detected and constitutes the calibration of the system without sample or reference standard. This reference standard is specific for each biomarker. For the biomarkers for which the exact number of elements may be quantified, as is the case, for example, of CTCs, the reference standard may even refer to the spectral response of these individual elements (from 0 to a reasonable number of units from which it may be affirmed with certainty that there is a pathology, e.g. metastasis-). Alternatively, the reference standard may be used as a binary system, so that it is considered that spectral responses that may be above a certain threshold correspond to the presence of a pathology, whilst spectral responses below that threshold are considered to correspond to an absence of pathology. For other biomarkers for which it is not viable to quantify the exact number of elements, but instead their concentration, such as, for example, the case of miRs, the reference standard is of this last type, so that a certain spectral response is associated to the concentration or levels which that biomarker has exceeded or not associated to the presence of pathology. In short, to know the concentration of a biomarker, for example miRs, the only way is calibrating the system with samples with known concentrations. Buffers are prepared which are the same as the measurement buffers, with certain concentrations of these biomarkers, the signal is obtained in the device and with that a calibration curve is made, which serves as a base to interpret the signal obtained when the test sample is passed.

There is a set of aspects in the detection process which are necessary to consider, since the device may provide a response with little precision or even erroneous (false positives). These aspects can be summarized as follows, although there may be others: presence of noise in the signal detected, the resonances that appear in the spectrums are habitually wide (undefined maximums) and the displacements of the maximums due to the presence of a new medium are scarce since the changes in refraction index are small. These drawbacks, together with the need for high precision in the measurement, make it necessary to find an element/device/aditament of improvement that provides a more accurate and reliable measurement. The present invention provides a solution based on a modification which enables the narrowing of the resonant peaks. In this way, the maximums of the spectrum will be better defined and their displacements, compared with the change of substances of different index, can be measured with greater accuracy. The inventors have proposed a chip design wherein an optical resonator, resonant cavity or Fabry-Perot cavity (on occasions throughout this text, referred to in abbreviation as F-P) is present.

A resonant cavity is constituted by a flat-parallel sheet with its two surfaces mirrored (two mirrors) (typically the mirroring is performed by depositing metal materials), or two highly reflective parallel mirrors in the case that the medium between them is air. Its functioning is based on the interferential phenomenon produced by the superimposition of multiple waves reflected between the mirrors on being illuminated by one of their faces. It typically works with the intensity transmitted by the interferometer although it is perfectly feasible to work with the reflected intensity. As we will see, one or another have advantages that will be seen below. When the resonant cavity is illuminated with a polychromatic beam, those wavelengths that satisfy the condition of interference maximum, exit through another face with the spectral distribution that obeys Airy's function. This function has a maximum value of intensity and has a certain width which depends on the angle of incidence of the entry face, the reflection factor of that reflected on its faces, the refraction index of the medium which is placed between them and the spacing between them. After fixing the angle of incidence (normal to the entry face in the proposed configurations), a greater reflection factor, a greater refraction index or a greater distance between faces, the function narrows and, therefore, the position of its maximum can be determined with greater precision.

Bearing in mind the potentialities offered by a configuration of a resonant cavity, the solution proposed is to use this type of geometries (i.e. a resonant cavity) to overcome the aforementioned drawbacks, referring to detection of the described microchip. To jointly reveal the potentialities of the extraordinary transmission and those provided by a resonant cavity in a preferred embodiment, one of the faces has been replaced by a metal surface nanostructured with nanoholes. To achieve the greatest efficacy (greatest sensitivity), the resonant cavity must be designed so that the wavelength of one of its resonances coincides with that of one of the plasmon resonances of the metal surface with nanoholes. By achieving this harmony, the cavity effects (narrowing of the resonance) are combined with those of extraordinary transmission.

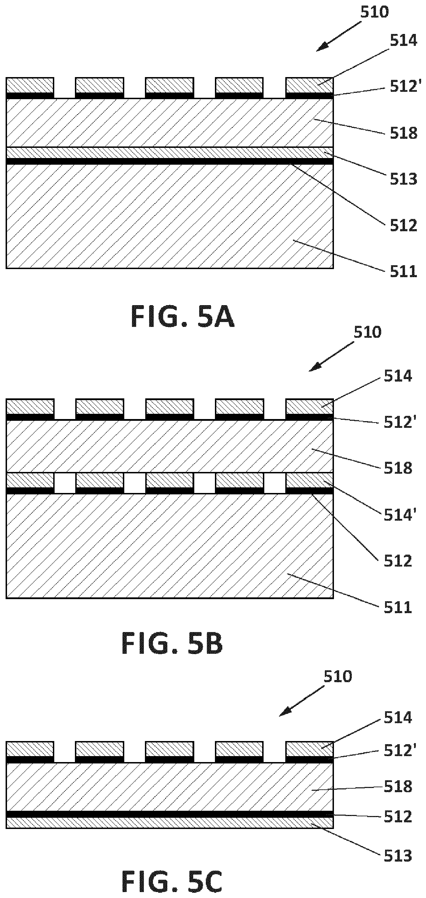

Figures 4A, 4B, 5A and 5B show several possible configurations of the chip with a resonant cavity. These implementations improve system sensitivity on combining the effect of the LSPR with the resonator effect of the resonant cavity. Each implementation is designed for a different sample flow system. Hence, the implementation of figures 4A and 4B is designed so that the passage of the sample (fluid that supposedly carries biomarkers) is through the resonant cavity (the flow circulates between the mirrors). The implementation of figures 5A, 5B and 5C is designed for a flow system of the sample placed on the surface of the nanostructured chip by a microfluidic cell (flow exterior to the resonant cavity). As explained above, in the implementation of figures 4A and 4B, the microfluidic cell is not essential unless the system is multiplexed, in which case it is necessary (the cell) to carry the sample to each sensor zone. If, by contrast, there is only a nanostructure array, the presence of a microfluidic cell is not strictly necessary. However, in this last case, it preferably uses a microfluidic cell to guarantee that the entire sample passes through the sensor array and nothing escapes.

The description and non-limiting examples of materials, geometric characteristics, manufacturing processes and other substrate properties, layer of metal to improve adhesion, layer of biocompatible metal and nanometric structures, biofunctionalization, etc. indicated in relation with the chip of figure 2, apply to the chips of figures 4A, 4B, 5A, 5B and 5C.

The different elements (light source, optical means for conditioning, means for detection and analysis, etc.) described in relation to figures 1A-1C may also be used in the biosensor which includes the chip described in figures 4A, 4B, 5A, 5B and 5C.

As in the aforementioned implementations, the chip 410 510 of the embodiments of figures 4A, 4B, 5A, 5B and 5C is biofunctionalized (for example, with antibodies, with DNA probes or with any other type of biofunctionalization, in accordance with the biomarker one intends to detect). By alternating different areas of nanostructures (arrays) on the metal of a same chip, a multiplexed system is achieved, which allows the detection of several tumour biomarkers, biomolecules and/or more complex structures (such as CTCs, miRs, mRNAs, DNAs, proteins or others), simultaneously. By way of example, each sensor zone (nanostructured) of the chip may be biofunctionalized with antibodies that recognize the specific CTCs of the tumour (anti-EpCAM, anti-cytokeratins, or others) and/or with DNA probes complementary to the specific miRs of the tumour under analysis.

As in figure 2, the chip 410 of figure 4A comprises a substrate 411 and a layer of nanostructured metal 414 (preferably with nanoholes), similar to those described in figure 2. It also preferably comprises a layer of metal to improve adhesion 412. To form the resonant cavity the chip 410 also comprises, together with the plasmon nanostructures 414 (which acts as one of the mirrors), and at a certain distance, a fine layer of metal 413 which acts as the other mirror, on a substrate 411'. Its adhesion, as in the case of the chip 210, has been preferably improved by a fine layer of metal 412'. The resonant cavity is formed by two thin metal sheets 414 413, one of them nanostructured (414). In figure 4B a variant is shown of the previous configuration, where the flat mirror (without nanostructures) 413 is replaced by another nanostructured metal surface 414' (preferably with nanoholes). The configuration of figure 4A is equivalent to the latter, since the image of the upper nanostructured surface provided by the flat metal sheet, acts as a second nanostructured metal surface. The advantage of the configuration described in figure 4B is that it is possible to independently design both nanostructured surfaces (size of the nanoholes and period of the net). However, it has the drawback that its alignment is more critical. In figure 4B, the resonant cavity is formed by the two thin nanostructured metal sheets 414 414'. Both the implementation of figure 4A and that of figure 4B may be considered "ad hoc" chip designs, in order that the flow of the sample to be monitored passes through the resonant cavity.

Figures 5A, 5B and 5C show other embodiments of the chip, which are alternatives to the chip 410 of figures 4A and 4B. In this case the structure of the chip is compact. This makes its manufacturing simpler, it avoids a high-precision mechanical positioning, but at the same time the fluid does not pass through the resonant cavity zone and, therefore, is lost, unlike what happens with the configurations of figures 4A and 4B, something of spectral sensitivity to the changes in refraction index of the sample that occur in the resonant cavity. In figure 5A, the chip 510 is formed by a substrate 511 whereon a fine layer of metal 512 is preferably deposited to facilitate adhesion, whereon a fine layer of metal by way of a mirror 513 is in turn deposited. A substrate 518 of a dielectric material transparent to the light is deposited on this metal 513, (i.e. which does not alter light when it passes through it) of suitable thickness which acts as support for the deposition of a layer of nanostructured metal (preferably with nanoholes) 514. Preferably, adhesion of the layer 514 is improved by a fine layer 512' of a specific metal. The substrate 518 does not have to be of the same material as the substrate 211 411 511 whereon the metal layer is deposited. Non-limiting examples of dielectric materials from which the substrate (polymer) 518 may be manufactured are: silicon oxide, silicon nitride or others.

As in the implementations of figures 4A and 4B, a variation of the chip of figure 5A is the replacement of the fine layer of metal 513 which acts as mirror of the resonant cavity, by another fine layer of nanostructured metal 514', as represented in figure 5B.

Figure 5C shows another alternative embodiment, wherein the chip 510 is formed by a substrate 518 whereon a fine layer of metal 512 is preferably deposited, on one of its surfaces, to facilitate adhesion, whereon a fine layer of metal by way of a mirror 513 is in turn deposited. On the other surface of the substrate 518 is deposited a layer of nanostructured metal (preferably with nanoholes) 514. Preferably, adhesion of the layer 514 is improved by a fine layer 512' of a specific metal. As can be observed it is a simplification of the implementation of figure 5A.

In figures 5A, 5B and 5C, the flow of the sample circulates on the structured sheet of metal 514 outside the resonant cavity. In figures 5A and 5C, the resonant cavity is formed by the two thin metal sheets 513, 514, one of them nanostructured (514). In figure 5B, the resonant cavity is formed by two thin nanostructured metal sheets 514', 514.

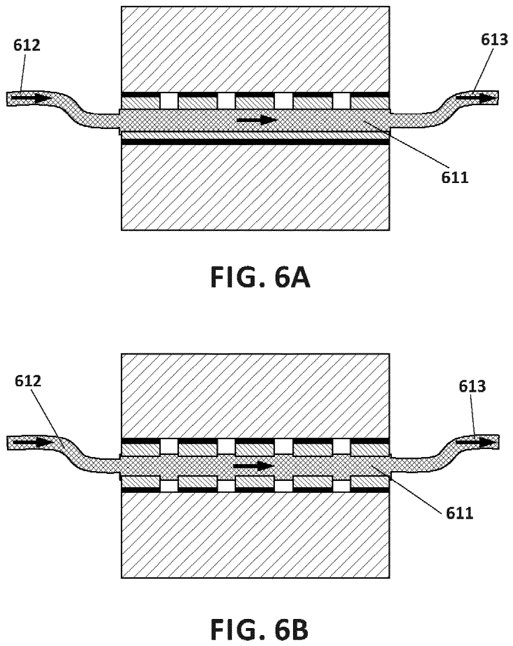

Figures 6A and 6B show how the fluid flows through the resonant cavity created in accordance with figures 4A and 4B respectively. It includes the microfluidic system comprising at least one inlet channel 612 and another outlet channel 613 of the flow of the sample 611. In this case, either the chip structure acts as microfluidic cell (flow through the cavity), or a specific cell is added which improves the monitoring. This option is especially recommendable when it concerns a multiplexed system.

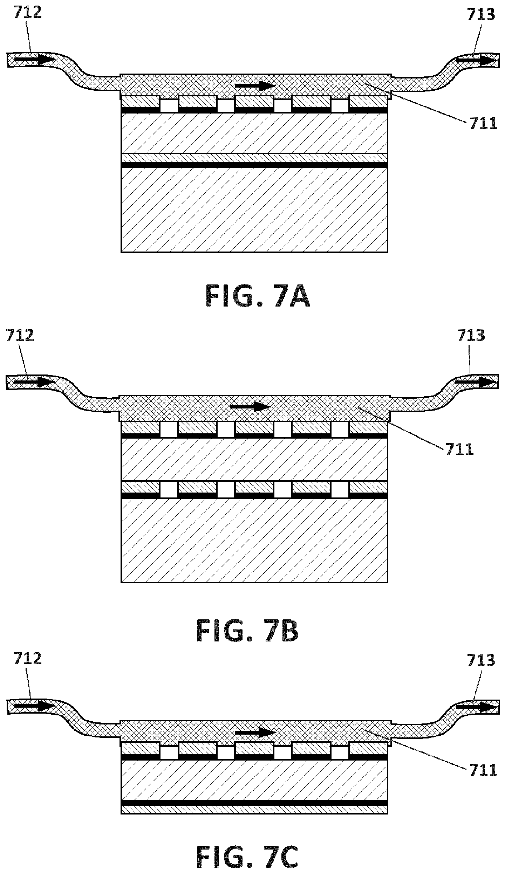

Likewise, figures 7A, 7B and 7C show the complete diagram of the configurations of figures 5A, 5B and 5C, respectively. It includes the microfluidic system comprising an inlet channel 712 and another outlet channel 713 of the flow of the sample 711. In this case, the fluid flows through a microfluidic cell on the surface of the nanostructured chip.

The F-P-type configurations of figures 4A, 4B, 5A, 5B and 5C make it possible to obtain a high quality factor, Q, defined as quotient between the central frequency of a spectral resonance and its width to the mid-height, Q=ω/Δω. A high value of Q for a resonance means a greater spectral definition or greater monochromaticity. In our case, it concerns producing a narrowing of the plasmon resonances by coupling with the resonant cavity.

If the implementations of figures 4A, 4B are compared with those of figures 5A, 5B and 5C, it is concluded that the implementations of figures 4A, 4B are more sensitive (make greater use of the effect of the resonant cavity, since the sample is in contact with the LSPR effect and with the resonant cavity). Furthermore, since the flow passes through the resonant cavity, it may save the manufacturing of the microfluidic cell, as has been previously explained. However, the manufacturing of the implementations of figures 4A, 4B is more complicated, since the separation between the two modules of the chip, -the space which acts as resonant cavity- is performed mechanically, which requires high precision to guarantee the required distance and give the suitable resonance. In turn, the implementations of figures 5A, 5B and 5C involve simpler manufacturing, since the resonant cavity is performed by the deposit of a layer of controlled thickness. However, these implementations are less sensitive as the sample is in contact with the LSPR effect but not with the resonant cavity resonance.

The localized surface plasmons (LSPR) produced in the metal layer (more specifically, in the metal nanostructures) as a consequence of the light which strikes the chip are preferably in the UV and/or VIS and/or IR spectral band. More preferably, they are in the spectral range of 0.6 to 0.8µm.

For the preferred case where one desires to detect at least circulating tumour cells (CTCs), they are found in very small quantities in the blood, with a high presence of healthy cells, and therefore their detection is complicated in fluids such as blood or urine. To identify them it is necessary to use antibodies which specifically recognize the tumour cells, thus avoiding false positives. Non-limiting examples of antibodies which may be used to increase specificity are specific antibodies of EpCAM and specific tumour cytokeratins. The inflammation that accompanies the development of cancer is chiefly mediated by the cytokeratins produced by the tumour cells. For example, in relation with some diseases related to the present invention, colorectal cancer is characterized by a specific cytokeratin pattern, with high levels of CK-6, -8 and - 20; whilst the breast cancer marker that is most widely used is CK-19 (as described by Barak et al, 2004). In turn, the epithelial cell adhesion molecule EpCAM is a membrane glycoprotein expressed in normal epithelial cells and found over-expressed in the majority of carcinomas. For this reason, it may be used to increase specificity by the CTCs adhered to the metal sheet.

In the case of miRs, it is very important to first determine the miRs the over-expression of which indicates the presence of a specific tumour type. For example, in relation with some diseases related to the present invention, several miRs have been described associated with colorectal cancer, finding miR-92 and -221 high in this type of cancer. The miRs involved in breast cancer are miR-148b, -376c, -409-3p and -801.

If the biomarker is a nucleic acid (miRs, mRNAs or DNAs) the chip is activated and is biofunctionalized with DNA probes complementary to the specific nucleic acids of the tumour under analysis. If the biomarker is a protein, the biofunctionalization is performed with molecules capable of specifically interacting with them (for example, antibodies, ligands, other proteins, aptamers).

Below, various simulations are described in detail which have been carried out of the biosensor of the invention, starting from optimized chips, so that their geometry is the best in order that greater detection sensitivity is achieved.

The chip has been optimized by numerical methods which allow studying the distribution of the electromagnetic field generated both in the vicinity of the device and far from it in comparison with the wavelength of the incident radiation, in the order of 600nm. This last case is the conventional one, since normally the detection microscope lens 138 (figure 1C) is placed at a distance from the device much greater than 600nm. The study of the electromagnetic field distribution in the vicinity of the device allows its sensitivity to be analysed. For the entire numerical study, techniques have been used for the exact resolution of electromagnetic problems, such as FDTD (*Finite Difference Time Domain*) and commercial software packages, such as COMSOL^{®}. Both methods are based on resolution algorithms of differential finite element equations. For the case of the study of electromagnetic field distribution in the vicinity of the device, the generation of "hot-spots" has been analysed (special location of high values of the local electromagnetic field) and their spatial distribution. This result is especially important given the low number of tumour cells foreseen to be present on the sensitive surface (real cases). For the conventional situation, it determines the effective spectral section (dependent on the wavelength of the incident radiation) of extinction (the device works by transmission, i.e. it detects the light intensity transmitted through the device and the effective spectral section of extinction is the parameter which determines this), the Plasmon resonances and their efficacy has been studied through their quality factor defined by Q = ω/Δω, where Δω is the spectral width of the resonance at frequency ω. For the previous numerical calculation, the configuration of the optical assembly described in figure 1C and previously detailed has been considered. In this assembly, both the illumination and the collection of transmitted light are performed, respectively, by two microscope lenses 135 and 138 of suitable openings. This means that the device is illuminated with a spatial extension beam limited by a microscope lens 135. In the numerical simulations, the use of illumination with Gaussian beam has also been considered (spatial distribution of electric field which may be mathematically described with a Gaussian function) and the electromagnetic energy has been collected from the transmitted light within the angle of opening of the collector microscope 138 lens.

The biomarker chosen for the simulation has been CTCs. The CTCs and the fluid "buffer" that carry it have been simulated as follows:
The operating principle of the biosensor is the modification of its spectral response when the refraction index of the medium that touches the sensor zone of the device changes (modification of a plasmon resonance in terms of its spectral intensity, position and width). This occurs due to the presence of any biological substance immersed in a reference buffer, which alters the refraction index of the latter (CTCs in the tests, although it equally occurs for any biological material immersed in a buffer). The modelling of the change in refraction index has been performed using well-known models of effective means, based on consolidated theories such as those of Maxwell-Garnet. It has worked with a buffer pattern volume (50000 µm³) and cells of average volume of 1400 µm³ (the average radius of a CTC cell is between 5 and 10 microns and represents around 3% of the total volume analysed) with refraction indices of 1.33 and 1.4 respectively. The optical data have been obtained from the literature and are known by a person skilled in the art. Thus, it is possible to demonstrate that the presence of one of these cells in that volume implies a variation in buffer index in its third decimal figure. In particular, it has been estimated that the index of the reference buffer of 1.33 now has an effective value of 1.332. A cell in the buffer changes the "effective" index of this unless there are two cells, two cells change it unless there are three cells, etc., so that a calibration curve of the device may estimate the number of CTCs present in the sample. The same occurs with miRs. If their concentration increases (or of a biomarker in general), there is a greater index variation.

A basic configuration such as that shown in figure 2, formed by a sheet of Au of 60 nm thickness, deposited on a glass substrate 211 gas been taken as starting point. On the sheet of Au, a periodic structure of circular nanoholes is created of 180nm in diameter and with an isotope period of 500nm. In these conditions, the sample to analyse (in liquid state) comes into contact with the layer of nanoholes 213 of the nanostructure using a microfluidic system (such as the microfluidic system 137 of figure 1C) and it is illuminated by an optical system 131-135. The fluid and the CTCs have been modelled in accordance with the effective medium model indicated in the previous paragraph. The transmitted light is collected with another optical system 136-1310, such as that indicated in figure 1C and its spectrum is analysed, in particular, one of the transmission peaks around 760nm. These transmission peaks, resonance wavelength, are spectrally sensitive to the optical properties of the sample in contact with the nanostructure, in particular, its refraction index. Variations of this lead to modifications in the spectral structure of said peak (spectral height, width and position). In particular, it defines a sensitivity parameter S as the quotient between the modification of the spectral position of the peak in nm, Δλ, with respect to the variation in refraction index, Δn, so that S=Δλ/Δn. The electromagnetic behaviour of the basic configuration has been simulated numerically using commercial software called COMSOL® which is capable of resolving electromagnetic problems of this type using finite elements (REF). With the aforementioned basic configuration, sensitivities are achieved in the order of 400nm/RIU. This means that a variation of one unit in the refraction index of the sample to be analysed produces a variation in the position of the transmission peak of 400nm to longer wavelengths.

A configuration such as that shown in figure 5A (figure 7A) (F-P resonant cavity configuration) is analysed below, working in reflection, for a nanostructure with the characteristics of the basic configuration, a sensitivity in the order of 200nm/RIU is obtained. This decrease does not mean that the configuration is less sensitive, as it can be increased by suitably modifying the period and/or the diameter of the nanoholes. For example, by modifying the period to 600nm, the sensitivity rises to 700nm/RIU). This configuration gives two important advantages. The first is that almost zero reflection minimums are analysed, instead of transmission maximums as in the basic configuration. It is well known in Optics that, in a spatial distribution of energy achieved by means of an interferential device, the visibility factor increases as the value of the interferential minimums tends to zero. The second advantage is that the spectral width of the reflection minimums in the mirror configuration is appreciably smaller than the transmission maximums in the basic configuration, this increases the quality factor Q.

Therefore, the resonant cavity-type configurations of figures 4A and 5A make it possible to obtain a greater, Q. A high value of Q for resonance means a greater spectral definition or greater monochromaticity. This is due to narrowing of the resonance frequencies of the plasmons in their coupling with the cavity. In particular, for the data of the basic nanostructure, the width is reduced to half, duplicating the quality factor Q.

Then the F-P resonant cavity configuration has been maintained but the sample has been made to pass through the cavity as in figure 4A (figure 6A). In this case, the sensitivity considerably increases, since the sensitivity of the nanostructure to changes in the refraction index of the sample is added to that of the resonances of the cavity, which are also affected by those changes. This is because the sample now forms part of the intracavity medium. This does not happen in the previously analysed configuration (figure 5A). However, in addition to the already mentioned advantages, it has that of its ease of manufacturing and stable assembly on a device used by non-specialized personnel.

Similar conclusions to those described above may be obtained with variants of the previous configurations such as those shown in figures 4B and 5B (figures 6B and 7Bb). These represent an equivalent configuration of nanostructured surface facing a mirror (object and its image through the flat mirror 413 or 513). The configurations of figures 4B and 5B have the advantage of being able to change the parameters of the two nanostructures independently, with the consequent advantage of optimization of the device in terms of its sensitivity.

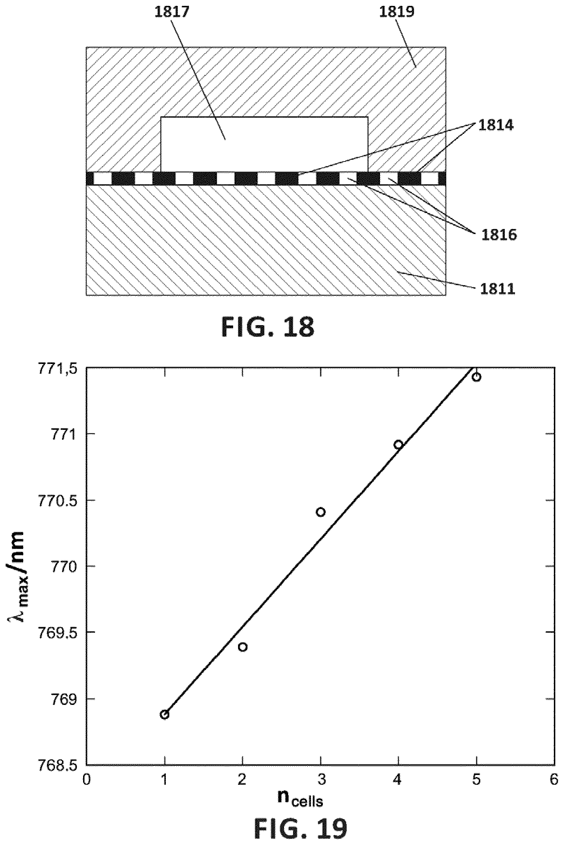

Although we have used the effective medium theory (since that theory is that of most general application for any type of biological medium to analyse) with the purpose of assessing the sensitivity of the device in nanometres/RIU, for the case of CTCs, a series of calculations have been performed where the physical presence of one or more CTCs have been simulated. Each one of these have been modelled as a parallelepiped of suitable dimensions to represent a deformed CTC adhered to the nanostructured surface and with a volume equivalent to 3% of the volume of the liquid buffer. A diagram of the experimental situation analysed is shown in Fig. 18 (basic configuration), where the substrate 1811, the nanostructured metal layer 1814 (with air 1816 between the nanostructures) and thereon a CTC (parallelepiped) 1817 with refraction index 1.4, immersed in the liquid buffer 1819 with index 1.33 are observed. The simulation shows that the presence of the cell in the buffer produces a displacement of the transmission peak equivalent to a modification of the refraction index from 1.33 to 1.332, as previously shown. This configuration has also allowed us to analyse the effect of the proximity of the cell to the nanostructured surface, showing greater sensitivity when the cell is completely adhered and decreasing as it separates from it. Finally, it has been verified that the presence of two or more cells produce displacements which follow a behaviour linear with the number of cells (Fig. 19) and which may be calibrated in nm/RIU with the simulations shown below.

Based on the effective medium theory, some of the simulations performed, as well as the results are described below.

### EXAMPLE 1: Basic configuration

In first place, a minimum configuration formed by periods (basic chip for the simulation) has been simulated of the initially studied geometry corresponding to the structure of the nanoholes distributed periodically in two-dimensional form with equal periods in the two directions. Nanoholes have been perforated with a radius of 90 nm in a thin sheet of gold with thickness 60 nm. Said metal layer is deposited on a dielectric substrate of glass with refraction index 1.50. The test liquid corresponding to the sample to be analysed is deposited on the nanohole sheet; its refraction index which may vary from 1.33 (buffer without biological material) to 1.34 (buffer with biological material in different quantities) with steps of 0.002.

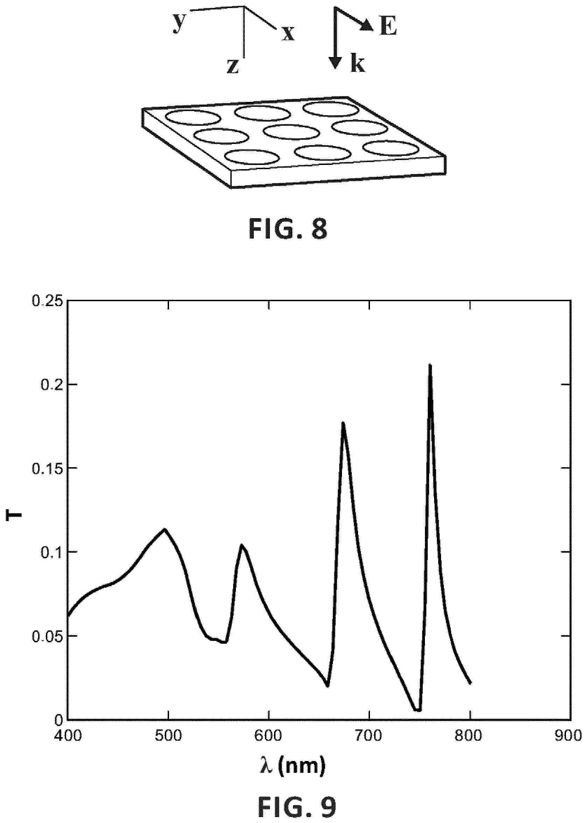

As shown in figure 8, the structure has been illuminated with a polarized flat wave throughout the X-axis, which is propagated in direction -Z. This means that light first encounters the zone of the sample in its passage through the simulated device.

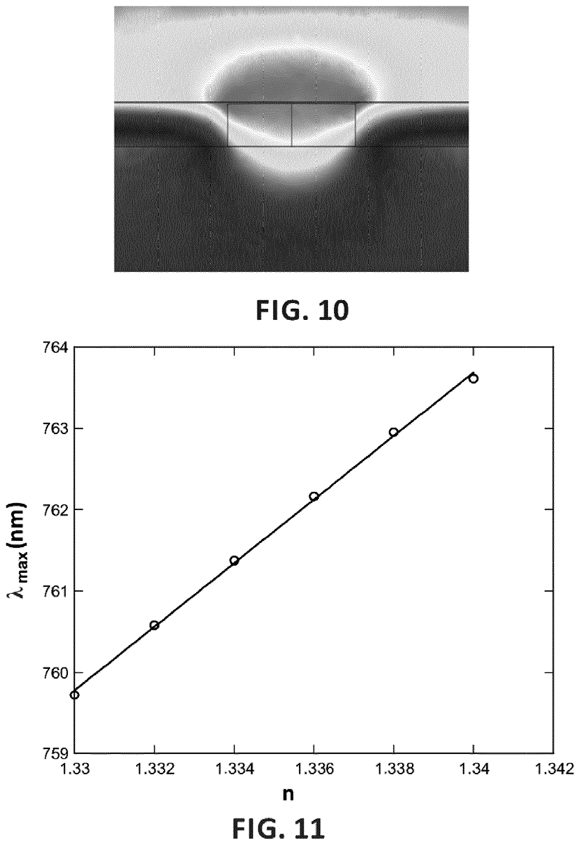

Making use of the commercial software COMSOL the transmission spectrum has been studied for wavelengths between 400-800 nm (figure 9). Fundamentally, we focus on the part of the spectrum with wavelengths greater than the period of the net. In this case, 500 nm. The near field has also been studied for the wavelengths wherein the resonances appear. An example is shown in figure 10 for the resonance of 760 nm shown in figure 9.

As commented above and following the effective media models, the refraction index of the medium to be monitored has been modified on the metal sheet. This simulates the presence of CTCs or the concentration of other biological elements, such as miRs. Determining the spectral position of the resonance of 760 nm (see figure 9) in accordance with the refraction index of the medium to be monitored, the sensitivity of the device described has been achieved (figure 11): 390.71 nm/R.I.U.

### EXAMPLE 2: F-P resonant cavity configuration, reflection spectrum

Below, a new geometry has been studied and simulated incorporating a thick layer of gold under the glass substrate with the purpose of obtaining F-P-type resonance between the nanostructured layer and the gold layer surface, which are those which form the resonant cavity. The glass thickness was fixed at 380 nm to achieve a resonance of the cavity. With this configuration, the device functions by reflection. The sample is positioned externally to the resonant cavity in contact with the nanohole array. In this way, we can verify how the spectrum changes and, as a consequence, the sensitivity with respect to the previous configuration on introducing the resonance cavity effect.

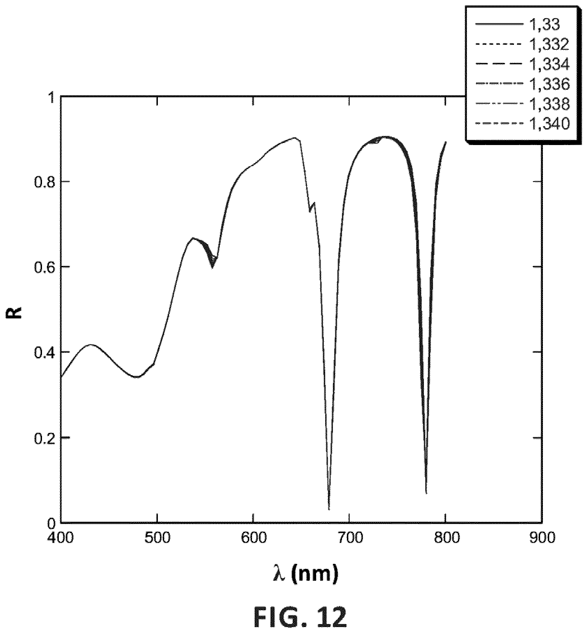

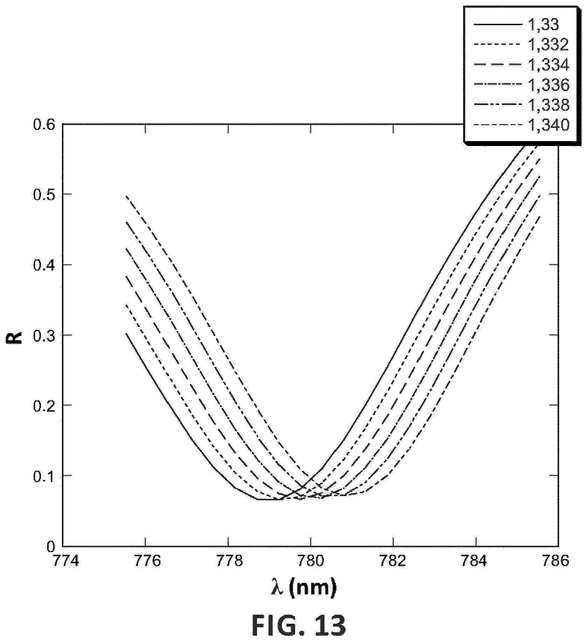

In figure 12 an example is shown of the reflection spectrum of the simulated configuration. It should be highlighted that on working by reflection the resonances are shown in the form of minimums instead of maximums. We will focus on the resonance found at the wavelength close to 760 nm, as can be observed in figure 13, which shows the variation in the reflection spectrum with the change in the refraction index of the sample.

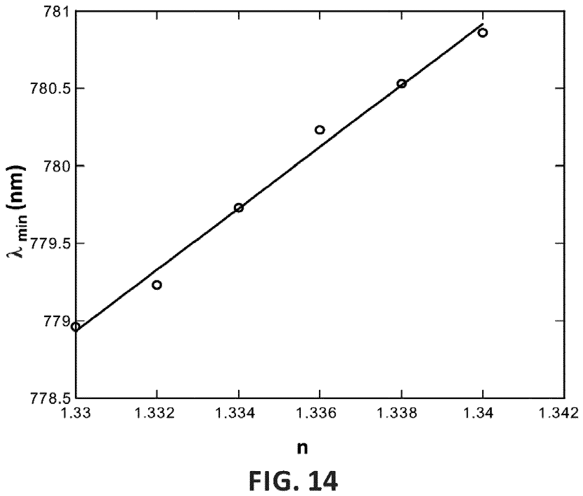

Through the spectral position of the minimums for different refraction indices of the sample, the sensitivity of the configuration with resonant cavity has been studied as can be seen in the representation of figure 14 (198.57 nm/R.I.U.).

### EXAMPLE 3: F-P resonant cavity configuration transmission spectrum

Following the previous line of investigation, obtaining cavity resonances, it was decided to study and simulate a new configuration. Here, the thickness of the thick gold layer has been reduced (greater than 100 nm, optically opaques the light, meaning almost all the light is reflected described in the previous configuration with resonant cavity at 20 nm with the purpose that it is optically thin and the light, in the range of frequencies in which we are working, is capable of passing through it. In this way, it is possible to obtain results from the transmission spectrum. Unlike the previous cases, the sample is not situated in the nanohole array but in the cavity created by both "mirrors", constituted by the nanostructured and the non-nanostructured sheet. In this way, the cavity resonances produced will be sensitive to the variation in the refraction index of the sample under study. A dielectric material, glass, is placed on the nanohole array, to achieve that there are no ohmic losses and absorption does not occur.

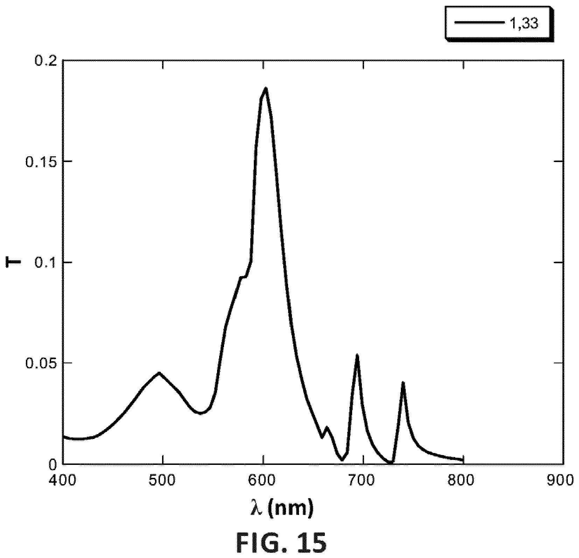

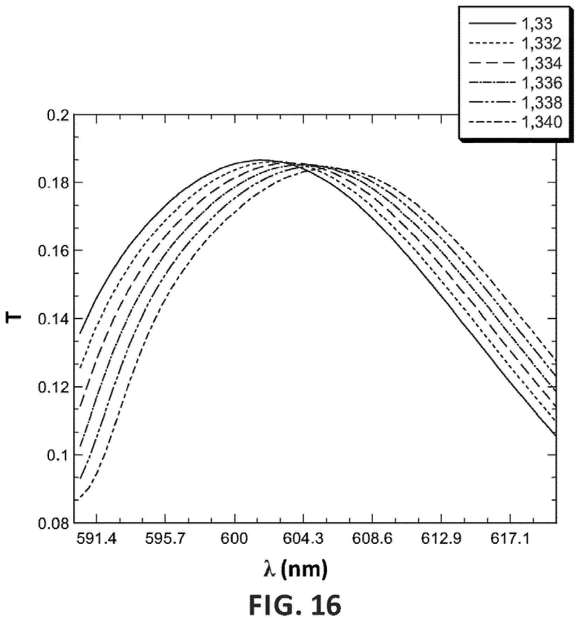

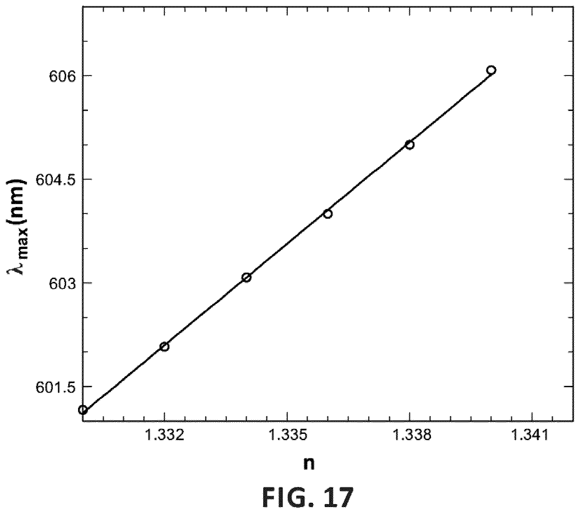

In figure 15, the transmission spectrum has been represented for the simulated structure and for a liquid refraction index corresponding to 1.33. In particular, as can be seen in figure 16, the studio has centred on analysing the resonance situated at approximately 600 nm, since this provides highest values in transmission.
Through the study of the variation of the spectral maximum of the resonance at 600 nm with the refraction index of the sample, a graphic representation has been made, illustrated in figure 17, since the sensitivity of the device described and simulated is obtained through its slope. In this way, a sensitivity of 489.72 nm/R.I.U has been obtained.

In this text, the word "comprises" and variations thereof (such as "comprising", etc.) should not be taken as being exclusive, that is, they do not exclude the possibility that what is described may include other elements, steps, etc.

Furthermore, the invention is not limited to the specific embodiments described above, but also covers, for example, variations that might be made by the average person skilled in the art (for example, as regards the choice of materials, dimensions, components, configuration, etc.), within the bounds of what can be inferred from the claims.

## Claims

1. A biosensor for detecting the concentration or quantity of at least one biomarker present in a sample of a fluid, **characterized in that** it comprises:
a chip (410, 510) comprising: a substrate (411, 518) whereon a layer of metal has been deposited whereon at least one nanostructure (414, 514) has been implemented, where said at least one nanostructure (414, 514) is designed to produce localized surface plasmon resonance (LSPR) when it is subjected to an optical radiation of a certain spectral range; and a resonant cavity delimited by two surfaces that act as a mirror in said certain spectral range, where one of the two surfaces that delimit the resonant cavity is said layer of metal with at least one nanostructure (414, 514), where said layer of metal with at least one nanostructure (414, 514) is biofunctionalized with at least one biomolecule that recognizes said at least one biomarker,
the biosensor being configured, on exposing said chip (410, 510) to optical radiation in said spectral range when said sample is in contact with the chip, to measure the concentration or quantity of said at least one biomarker present in the sample, by comparison of the spectral response of the light at the exit of the chip (410, 510) with a previously determined spectral pattern, where said spectral response responds to the combined effect of the localized surface plasmon resonance (LSPR) in said at least one plasmon nanostructure (414, 514) and of the resonant cavity resonance.

2. The biosensor of claim 1, wherein said chip (410) comprises a second substrate (411') whereon a layer of metal (413, 414') has been deposited constituting the second surface which delimits said resonant cavity, the biosensor being configured so that, in use, the flow of the sample passes through the resonant cavity (611).

3. The biosensor of claim 2, wherein on said layer of metal deposited on the second substrate (411') at least one nanostructure (414') has been implemented, where said nanostructure (414') is designed to produce localized surface plasmon resonance (LSPR) when it is subjected to an optical radiation of a certain spectral range.

4. The biosensor of claim 1, wherein said chip (510) comprises, on the other surface of said substrate (518), a second layer of metal (513) constituting the second surface which delimits said resonant cavity, the biosensor being configured so that, in use, the flow of the sample passes over the layer of metal whereon at least one nanostructure (514) has been implemented and which acts as first surface which delimits the resonant cavity.

5. The biosensor of claim 1, wherein said chip (510) comprises a second substrate (511) whereon a layer of metal (513, 514') has been deposited constituting the second surface which delimits said resonant cavity, the biosensor being configured so that, in use, the flow of the sample passes over the layer of metal whereon at least one nanostructure (514) has been implemented and which acts as first surface which delimits the resonant cavity.

6. The biosensor of claim 5, wherein on said layer of metal deposited on the second substrate (511) at least one nanostructure (514') has been implemented, where said nanostructure (514') is designed to produce localized surface plasmon resonance (LSPR) when it is subjected to an optical radiation of a certain spectral range.

7. The biosensor of any of the preceding claims, comprising on said substrate (411, 411', 518, 511) a layer of metal (412, 412', 512, 512') to facilitate adhesion of the layer of metal (414, 414', 413, 512', 512) which delimits the resonant cavity.

8. The biosensor of any of the preceding claims, wherein said at least one nanostructure is a nanohole.

9. The biosensor of any of the preceding claims, wherein said chip (410, 510) comprises a plurality of arrays of different nanostructures, with the biosensor being configured to measure the concentration or quantity of different biomarkers simultaneously.

10. The biosensor of any of the preceding claims, wherein a dimension of said at least one nanostructure is less than the wavelength of the light whereto the chip (410, 510) is exposed.

11. The biosensor of any of the preceding claims, further comprising a microfluidic cell to immobilize the biomarkers on the surface of the chip.

12. The biosensor of any of the preceding claims, wherein said at least one biomarker are circulating tumour cells (CTCs).

13. A diagnostic kit to analyse a sample of a fluid to determine the concentration and/or quantity of at least one biomarker of a disease, **characterized in that** it comprises a biosensor in accordance with any of claims 1 to 12.

14. Use of the biosensor of any of claims 1 to 12 to diagnose the presence and/or evolution of metastasis.

15. A method for detecting the quantity and/or concentration of at least one biomarker present in a sample of a fluid, where said quantity and/or concentration of at least one biomarker is indicative of the presence or absence of a disease or of the evolution of a disease, **characterized in that** it comprises the stages of:
making a sample of a fluid flow (612, 712) through a chip (410, 510) comprising at least one substrate (411, 518) whereon a layer of metal has been deposited whereon at least one nanostructure (414, 514) has been implemented, and a resonant cavity delimited by two surfaces that act as a mirror in a certain spectral range, where one of the two surfaces that delimit the resonant cavity is said layer of metal with at least one nanostructure (414, 514);
subjecting said chip (410, 510) to an optical radiation in said certain spectral range, where said optical radiation produces localized surface plasmon resonance (LSPR) in said at least one nanostructure (414, 514) and resonance in said resonant cavity;
determining the concentration of said at least one biomarker present in the sample, by comparison of the spectral response of the light at the exit of the chip (410, 510) with a previously determined spectral pattern, where said spectral response responds to the combined effect of the localized surface plasmon resonance in said at least one plasmon nanostructure (414, 514) and of the resonant cavity resonance.

16. The method of claim 15, wherein said stage of making a sample of a fluid flow (612) through a chip (414) comprises making the flow of said sample pass through the resonant cavity (611).

17. The method of claim 15, wherein said stage of making a sample of a fluid flow (712) through a chip (514) comprises making the flow of said sample pass over the layer of metal whereon at least one nanostructure (514) has been implemented and which acts as first surface which delimits the resonant cavity.

18. A method to diagnose the presence and/or evolution of metastasis comprising applying the method to detect the quantity and/or concentration of at least one biomarker present in a sample of a fluid in accordance with any of claims 15 to 17.
